# NEW EUROPEAN PATENT SPECIFICATION

(11) **EP 0 638 232 B2**
(45) Date of publication and mention of the opposition decision: **29.12.2004**
(45) Mention of the grant of the patent: 01.12.1999
(21) Application number: 94202259.1
(22) Date of filing: 05.08.1994
(51) Int. Cl.: A01J 7/00

(54) **A construction for automatically milking animals**
Vorrichtung zum automatischen Melken von Tieren
Dispositif de traite automatique d'animaux

(30) Priority: 09.08.1993 NL 9301378
(43) Date of publication of application: 15.02.1995
(73) Proprietor: MAASLAND N.V., 3147 PA Maassluis (NL)
(72) Inventor: Van der Lely, Cornelis, CH-6300 Zug (CH)
(74) Representative: Corten, Maurice Jean F.M.

(56) References cited:
- EP-A- 0 229 682
- EP-A- 0 300 115
- EP-A- 0 306 579

## Description

The present invention relates to a construction or a similar arrangement according to the preamble of claim 1. In EP-A-0 229 682, the detection member is attached to the robot head, which serves as a carrier for one or a number of teat cups, and interferes with an accurate determination of the position of the teats by the detection member. EP-A-0 300 115 discloses a gripper for attaching teat cups and a linearly movable detection member. In order to facilitate this positional determination and to perform it accurately, and to create a more flexible system, the construction of the type as described in the preamble is, according to the invention, characterized in that the detection member (24) is attached to the frame of the milking box (2) capable of being moved in three directions.

The detection member is then more in particular movable in the vertical, transverse and longitudinal directions with respect to the wall of the milking box.

During coupling of the teat cups to the teats of an animal, the detection member can be in a position at one side of the teats, whilst the teat cups can be guided by the robot head to the teats from another side of the teats.

In this situation, the detection member may have been moved to a position near the rear side of the udder passing between the hind legs, as well as near the side of the udder from the side wall of the milking box, whilst in both these cases the robot head can then be guided rearwardly from the leading side, after having been pivoted to under the animal. "From the rear side of the milking box" means that the detection member can be guided to the udder whilst passing between the hind legs as well as passing along one of the hind legs, to the side of the udder.

For a better understanding of the invention and its constructive details and to show how the same may be carried into effect, reference will now be made by way of example, to an embodiment shown in the accompanying drawings, in which:
Figure 1 shows the lay-out of two boxes, the rear one of which is arranged for selecting the animals, possibly massaging and cleaning the udder of an animal present in this box and feeding it with concentrate, whereas the front box is arranged as a milking box in which concentrate can also be supplied to the animal;
Figure 2 is a plan view of the milking box shown in Figure 1;
Figure 3 is a side view of this milking box;
Figure 4 is a plan view of an alternative embodiment of the milking box.

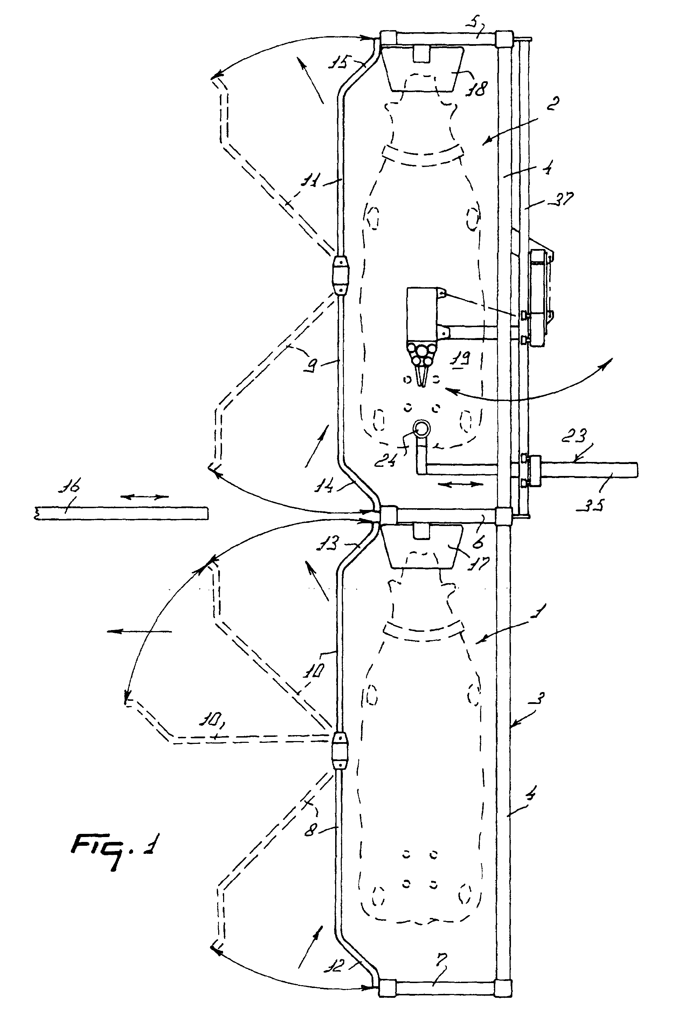

Figure 1 shows two boxes 1 and 2 which are contiguous to each other in the lengthwise direction. These boxes are bounded by a frame 3 consisting of a frame portion 4 forming a longitudinal side of the two boxes, the frame portions 5, 6 and 7 forming the short sides of the boxes and doors provided at the other longitudinal side of the boxes 1 and 2, the entrance doors of the boxes 1 and 2 being denoted by the reference numerals 8 and 9 and the exit doors of the boxes by 10 and 11. The doors 8 and 10 are pivotal approximately halfway the longitudinal side of box 1, whereas the doors 9 and 11 are pivotal approximately halfway the longitudinal side of box 2. Near their ends the doors 8 to 11 have a portion 12 and 13, 14, 15, respectively, which in the closed condition of the doors extend to the midway point of the relevant boxes. These inwardly directed portions 12 to 15 are disposed such that, when the doors have been moved to a first opened state, illustrated by means of broken lines in Figure 1, the inwardly extending portions 12 to 15 are predominantly located such that they are in alignment, parallel to the longitudinal direction of the two boxes. Particularly by moving the exit door 10 of box 1 and the entrance door 9 of box 2 to this first opened state, a lateral connecting passage is formed between box 1 and box 2 and an animal can be guided from box 1 into the box 2. In the Figure there is furthermore provided a partition 16 which extends transversely to the longitudinal direction of the boxes, more specifically in the region of the lateral frame portion 6 between the two boxes. This partition 16 is movable in a direction transversely of the longitudinal direction of the boxes, whilst the partition 16 remains in alignment with the transverse frame portion 6. When the partition is in the position shown in Figure 1, then an animal can pass from box 1 to box 2 when the doors 9 and 10 have been moved to the first opened state, whilst, when the partition 16 has been moved towards the transverse frame portion 6 and thereafter the door 10 has been moved to a second opened state, illustrated by broken lines in Figure 1, then an animal can be returned from box 1 to the shed of the construction. The system can operate in an excellent manner also without the partition 16, as, by keeping the door 9 closed and moving the door 10 to the second opened state, an animal can be denied access to box 2 and will be forced to enter the shed of the construction. However, for the case in which the area aside of the doors 9 and 11 of box 2 are given a different destination, the movable partition is of importance.

The boxes 1 and 2 both include an automatic feeding implement 17 and 18. Near these automatic feeders both boxes accommodate an animal identification sensor (not shown in the Figures) which is connected to a computer system, which animal identification sensors form an animal identification system in combination with a transponder worn by the animals. With the aid of this animal identification system it is permanently updated in the computer system which animal is present at which moment in which box. For that purpose the memory of the computer system has a separate file for each animal, in which file all relevant information about the relevant animal has also been stored. More in particular, in this file it is recorded when an animal has been milked for the last time, so that it is always known how much time has elapsed between the latest milking turn and the instant an animal has entered the box 1, when an animal has calved last, when the lactation period of an animal has started, how much milk it yields in each milking turn, etc. This information is important to decide whether an animal may enter the box 1, may be milked or not. The box 1 is therefore also provided with means for selecting the animals, whilst furthermore the opportunity can be used to clean and optionally massage the udder of the animal to stimulate the milk production, when by means of the animal identification system and the data in the file of the relevant animal in the memory of the computer system it has been decided that the animal may be milked, whilst in addition concentrate can be supplied to the animal in the box 1. The box 2 is equipped as a milking box, into which an animal is admitted from box 1 for the purpose of being milked, whilst additional concentrate can be fed to the animal if desired.

An animal which has recently calved, can automatically and/or to the livestock farmer's option be milked once or more times per 24 hour's period more frequently than the average number of times the other animals of the herd, to which the recently calved animal belongs, are milked. Likewise, depending on the beginning of the lactation period of an animal, the animal can be milked more or less times per 24 hour's period. In this and other cases it can automatically and/or to the livestock farmer's option be recorded in the computer system how many times a given animal can be milked in each 24 hour's period and the animals can be stimulated to go at the proper moments, summoned by the computer system, to the boxes 1 and 2. In the computer it has then been recorded how many times per 24 hour's period and with what interval an individual animal can be milked. When the time intervals between consecutive milking turns have been determined, measures must be taken to ensure that the animals are stimulated to go to the milking box after these relevant time intervals have elapsed. To that end, stimulating means may be placed all over the construction, more specifically in the lying boxes and in the feeding stations, for stimulating the animal to go to the milking box. These stimulating means can, for example, produce sound or light signals or, more in particular, the animals in the lying boxes and in the feeding stations can be given electric shocks, which contribute to forcing the animals to go from the lying box or feeding station to the milking boxes 1 and 2 through the shed. A suitable shed lay-out, more specifically such a shed lay-out in which the animals must follow a fixed path through the shed to the milking box, will definitely contribute thereto.

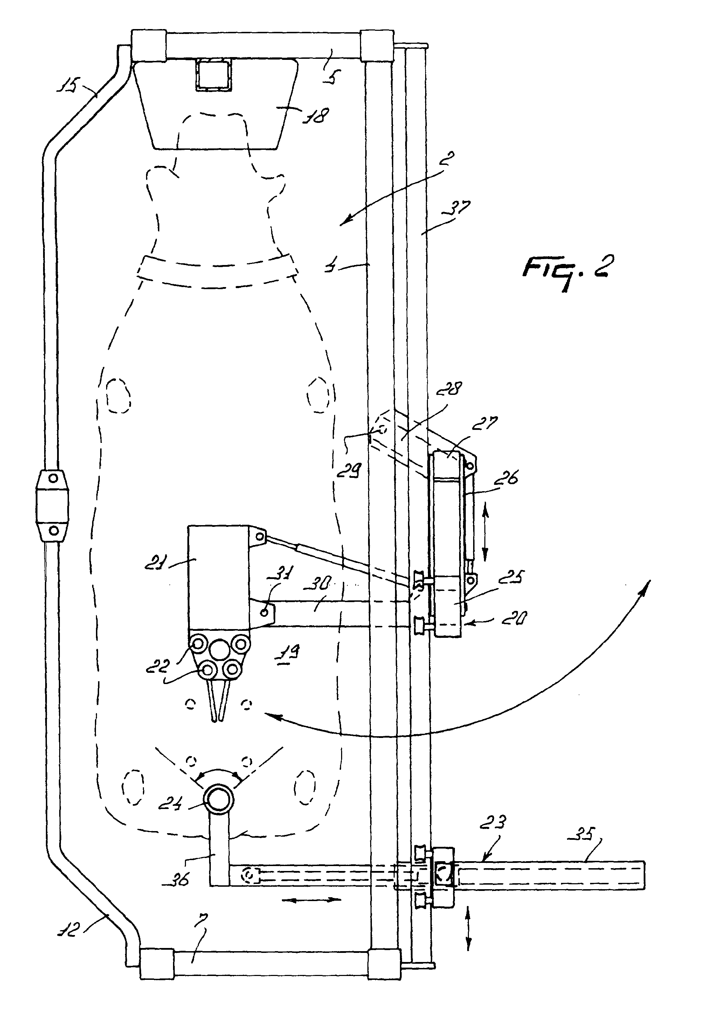

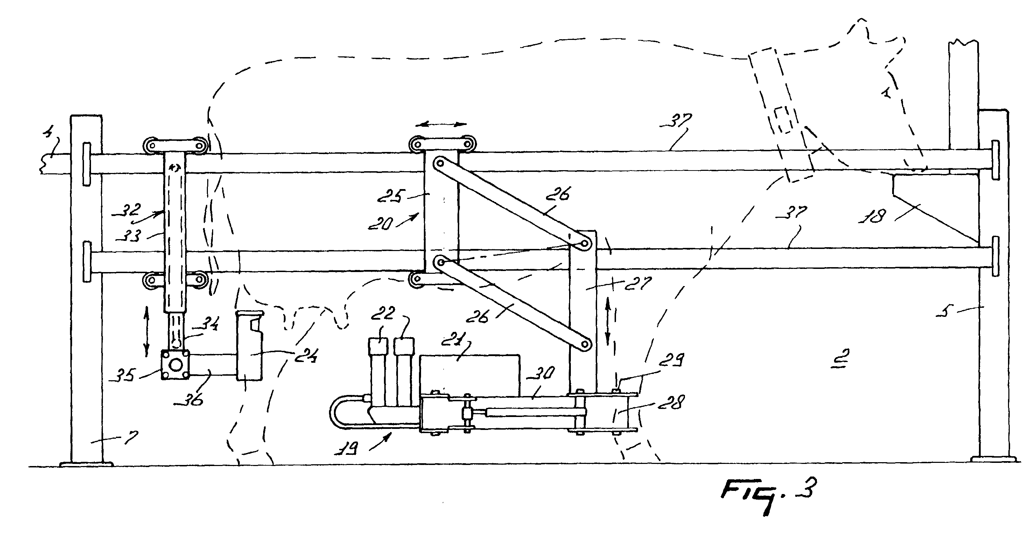

Figures 2 and 3 are a plan view and a side view, respectively, of only the milking box 2. For the milking operation a milking robot 19 is present, which includes a robot arm construction 20, at the end of which a robot head 21 is disposed which serves as a carrier for four teat cups 22. In addition, the milking robot 19 includes a carrier structure 23 for a detection member 24. The robot arm construction 20 carrying the robot head 21 and the teat cups 22 is independently movable with respect to the carrier structure 23 with the detection member 24.

The robot arm structure 20 is constituted by a carrier element 25 which is movable over a rail 37, parallel to the frame portion 4, and to which a carrier 27 which can be moved up and down is attached by means of a parallelogram structure 26. At its bottom side the carrier 27 is provided with a supporting element 28 which is rigidly connected thereto and extends inwardly and slightly forwardly. A robot arm 30 is connected capable of pivoting about an upwardly directed shaft 29 to the supporting element 28. The robot head 21 is attached capable of pivoting about an upwardly directed shaft 31 to the end of the arm 30. By a motion in the longitudinal direction of the milking box 2, a pivotal movement about the shaft 29 and, if necessary, by pivoting the robot head 21 about the shaft 31 with respect to the robot arm 30, all the desired movements of the robot head 21 in a horizontal plane to under the animal standing in the box 2 are possible, whilst with the aid of the parallelogram structure 26 an up and down motion can be obtained. All these movements are controlled by, preferably pneumatical, cylinders, since these cylinders slightly yield when the animal pushes or kicks against the robot arm structure. The pneumatic working cylinders are controlled by the computer system.

Independently of the robot arm structure 20, which is in a position more advanced to the leading side of the milking box 2, there is disposed, near the rear side of the milking box 2, the carrier structure 23 for the detection member 24. Also the carrier structure 23 includes a carrier element 32 which is movable along the rail 37. This carrier element 32 is constituted by a hollow beam 33, within which an inner beam 34 is disposed capable of moving upwardly and downwardly. At the bottom side of this inner beam 34 a carrier 35 is present which is movable transversely to the longitudinal direction of the milking box 2 and at the end of which carrier 35 a supporting element 36 for the detection member 24 is attached. By the capability of moving in the longitudinal direction of the milking box 2, the capability of moving in height of the inner beam 34 with respect to the hollow beam 33 and the capability of transverse motion of the carrier 35 with the supporting element 36 and the detection member 24 with respect to the inner beam 34, a motional feature of the detection member 24 in three coordinates is realized, which motional feature itself is rendered possible with the aid of the, preferably computer-controlled, pneumatic cylinders. In Figure 1 it is shown how, with the aid of the carrier structure 23, the detection member 24 is adjusted to a position in which this detection member has been moved passing between the two hind legs of the animal present in the milking box 2 to a position close to the hind teats of the animal. As the detection member 24 is designed as a laser which is pivotal about an upwardly directed shaft and produces a very narrow scanning beam, which is moved from a short distance over the teats of the animal, an extremely accurate positional determination of the teats is made possible. The detection member 24 can be adjusted to the position shown by moving the detection member to a central position between the two longitudinal sides and by moving it thereafter to a position which is determined from the computer system on the basis of the data stored in the file of the animal about the position of the teats. Here the motion of the detection member 24 is performed totally independently of the robot arm carrier structure 20 of the teat cups 22 and is therefore not obstructed thereby in any way. When by means of the detection member 24 the position of the individual teats has been stored, the teat cups 22 which have been moved in the meantime to under the animal's udder, can be connected.

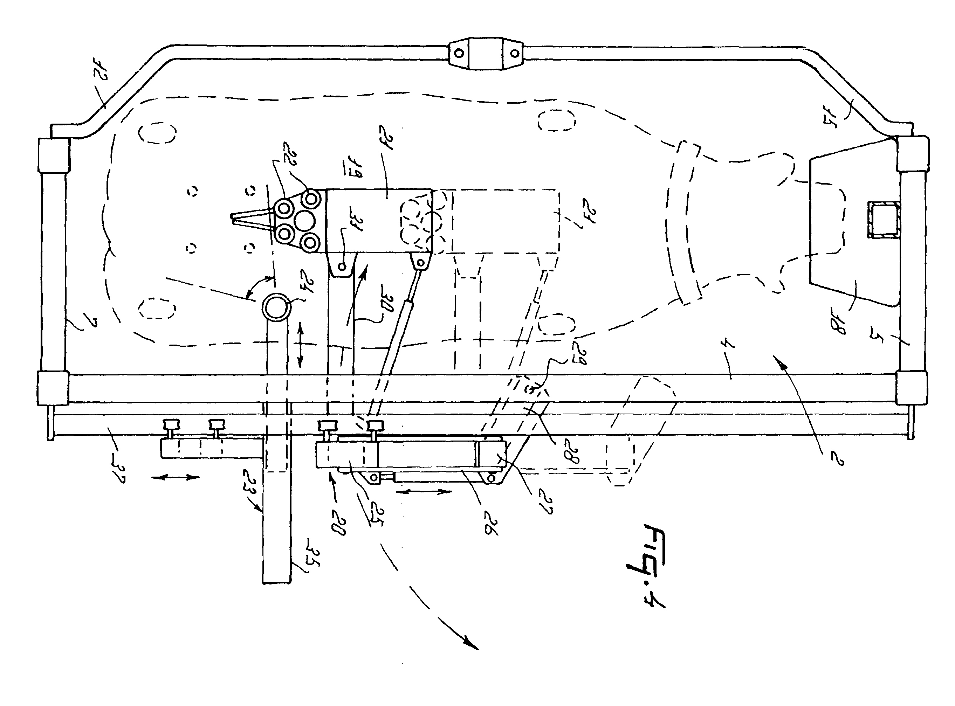

Figure 4 shows an alternative embodiment of the carrier structure 23 for the detection member 24. The detection member 24 is then directly disposed at the end of the carrier 35. As a result thereof it is possible to approach the udder of the animal present in the milking box 2 from the side using the detection member 24. As in this situation the carrier structure 23 and, more in particular the carrier 35, is in a more advanced position, it will be necessary for the robot arm structure 20 to be adjusted to a more advanced position so as to be able to pivot to under the animal without any obstruction by the carrier structure 23. Not until the robot head 21 has been moved to under the animal, more specifically to a position indicated by broken lines, the robot head 21 can be moved rearwardly towards the udder.

In the foregoing description the place in which the animals are present during milking is designated as a milking box. It will be obvious that this milking box may be of any conceivable design; it may also form part of the shed. The invention is therefore not limited to the construction shown here and is also not limited to the embodiments described sofar, but also relates to all kinds of modifications thereof, of course in sofar they are within the scope of the accompanying claims.

## Claims

1. A construction or a similar arrangement for automatically milking animals, such as cows, having a milking box (2) comprising a milking robot (19) with a movable robot head (21), said robot head serving as a carrier for one or a number of teat cups (22), said milking box further comprising a detection member (24) for determining the position of the teats of the animals, the detection member (24) and the robot head (21) being movable independently of each other, **characterized in that** the detection member (24) is attached to the frame of the milking box (2) capable of being moved in three directions.

2. A construction as claimed in claim 1, **characterized in that** the detection member (24) is movable into the milking box (2) in one direction and that the robot head (21) is movable into the milking box (2) from another direction.

3. A construction as claimed in claim 1, **characterized in that** the detection member (24) is disposed such that it is movable in the vertical, transverse and longitudinal directions.

4. A construction as claimed in any one of the preceding claims, **characterized in that**, during coupling of the teat cups (22) to the teats of an animal, the detection member (24) is in a position at one side of the teats and the teat cups are guided by the robot head (21) to the teats from another side of the teats.

5. A construction as claimed in any one of the preceding claims, **characterized in that** the detection member (24) is movable into the milking box (2) at the rear side of the milking box (2).

6. A construction as claimed in claim 5, **characterized in that**, during coupling of the teat cups (22) to the teats of an animal, the detection member (24) is in a position near the rear teats of the animal.

7. A construction as claimed in any one of the preceding claims, **characterized in that** the detection member (24) is movable into the milking box (2) from the side of the milking box (2).

8. A construction as claimed in claim 7, **characterized in that**, during coupling of the teat cups (22) to the teats of an animal, the detection member (24) is in a position near the side of the udder of the animal.

9. A construction as claimed in any one of the preceding claims, **characterized in that** the detection member (24) is disposed rotatably, more in particular capable of reciprocating, about an upwardly directed shaft.

10. A construction as claimed in any one of the preceding claims, **characterized in that** the detection member (24) includes a laser.

11. A construction as claimed in any one of the preceding claims, **characterized in that** a radiation scanning beam is obtained with the aid of the detection member (24) for detecting the teats from the rear side.

12. A construction as claimed in any one of the preceding claims, **characterized in that** a radiation scanning beam is obtained with the aid of the detection member (24) for detecting the teats from the side.

13. A construction as claimed in any one of the preceding claims, **characterized in that**, with the aid of the detection member (24), a radiation scanning beam is obtained, of which the scanning spot is aimed at the upper side of the teats during coupling of the teat cups (22) to the teats of an animal.

14. A construction as claimed in any one of the preceding claims, **characterized in that** the milking robot (19) includes a robot arm construction (20), of which the robot head (21) forms the end, this robot arm construction (20) being movably attached to the frame (3) of the milking box (2) near the front legs of an animal present in the milking box (2).

15. A construction as claimed in claim 14, **characterized in that** the robot arm construction (20) is movable along a straight guide (37) at the longitudinal side of the milking box (2), whilst the robot head (21) is movable in the upward direction, and, with respect to the robot arm construction (20), pivotally about an upwardly directed shaft (31).

16. A construction as claimed in any one of the preceding claims, **characterized in that** moving the detection member (24) and the robot head (21) is effected by means of pneumatic cylinders and/or stepper motors.

17. A construction as claimed in any one of the preceding claims, **characterized in that** the milking box (2) includes a cow identification sensor which is connected to the computer and, in combination with a transponder to be worn by the animals, forms an animal identification system, with the aid of which the relevant data files relating to the individual animals are read from the computer, on the basis of which data files the at least coarse positioning of the detection member (24) and the robot head (21) near and under, respectively, the udder of an animal, can optionally be effected.

## Patentansprüche

1. Vorrichtung oder ähnliche Anordnung zum automatischen Melken von Tieren, wie z. B. Kühen, die eine Melkbox (2) mit einem Melkroboter (19) mit bewegbarem Roboterkopf (21) aufweist, wobei der Roboterkopf als Träger für einen oder eine Anzahl von Zitzenbechern (22) dient und die Melkbox ferner ein Ermittlungsglied (24) zum Ermitteln der Position der Zitzen der Tiere aufweist, wobei das Ermittlungsglied (24) und der Roboterkopf (21) unabhängig voneinander bewegbar sind, **dadurch gekennzeichnet, daß** das Ermittlungsglied (24) am Rahmen der Melkbox (2) angebracht und in drei Richtungen bewegbar ist.

2. Vorrichtung nach Anspruch 1,
**dadurch gekennzeichnet, daß** das Ermittlungsglied (24) in einer Richtung in die Melkbox (2) hineinzubewegen ist, und daß der Roboterkopf (21) in einer anderen Richtung in die Melkbox (2) hineinzubewegen ist.

3. Vorrichtung nach Anspruch 1,
**dadurch gekennzeichnet, daß** das Ermittlungsglied (24) derart angeordnet ist, daß es in vertikaler sowie in Quer- und Längsrichtung bewegbar ist.

4. Vorrichtung nach einem der vorhergehenden Ansprüche, **dadurch gekennzeichnet, daß** sich das Ermittlungsglied (24) beim Anschließen der Zitzenbecher (22) an die Zitzen eines Tieres in einer Position auf der einen Seite der Zitzen befindet, und daß die Zitzenbecher durch den Roboterkopf (21) von der anderen Seite der Zitzen her zu den Zitzen bewegt werden.

5. Vorrichtung nach einem der vorhergehenden Ansprüche, **dadurch gekennzeichnet, daß** das Ermittlungsglied (24) auf der Rückseite der Melkbox (2) in die Melkbox (2) hineinzubewegen ist.

6. Vorrichtung nach Anspruch 5,
**dadurch gekennzeichnet, daß** sich das Ermittlungsglied (24) beim Anschließen der Zitzenbecher (22) an die Zitzen eines Tieres in einer Position nahe den hinteren Zitzen des Tieres befindet.

7. Vorrichtung nach einem der vorhergehenden Ansprüche, **dadurch gekennzeichnet, daß** das Ermittlungsglied (24) von der Seite der Melkbox (2) aus in die Melkbox (2) hineinzubewegen ist.

8. Vorrichtung nach Anspruch 7,
**dadurch gekennzeichnet, daß** sich das Ermittlungsglied (24) beim Anschließen der Zitzenbecher (22) an die Zitzen eines Tieres in einer Position nahe der Seite des Euters des Tieres befindet.

9. Vorrichtung nach einem der vorhergehenden Ansprüche, **dadurch gekennzeichnet, daß** das Ermittlungsglied (24) um eine aufwärts gerichtete Achse drehbar, insbesondere hin- und herbewegbar angeordnet ist.

10. Vorrichtung nach einem der vorhergehenden Ansprüche,
**dadurch gekennzeichnet, daß** das Ermittlungsglied (24) einen Laser aufweist.

11. Vorrichtung nach einem der vorhergehenden Ansprüche,
**dadurch gekennzeichnet, daß** mittels des Ermittlungsgliedes (24) ein Abtastlichtstrahl zum Detektieren der Zitzen von hinten erzeugt wird.

12. Vorrichtung nach einem der vorhergehenden Ansprüche,
**dadurch gekennzeichnet, daß** mittels des Ermittlungsgliedes (24) ein Abtastlichtstrahl zum Detektieren der Zitzen von der Seite erzeugt wird.

13. Vorrichtung nach einem der vorhergehenden Ansprüche,
**dadurch gekennzeichnet, daß** mittels des Ermittlungsgliedes (24) ein Abtastlichtstrahl erzeugt wird, dessen Abtastlichtpunkt während des Anschließens der Zitzenbecher (22) an die Zitzen eines Tieres auf das obere Ende der Zitzen gerichtet ist.

14. Vorrichtung nach einem der vorhergehenden Ansprüche,
**dadurch gekennzeichnet, daß** der Melkroboter (19) eine Roboterarm-Vorrichtung (20) aufweist, deren Ende durch den Roboterkopf (21) gebildet ist, wobei diese Roboterarm-Vorrichtung (20) nahe den Vorderbeinen eines in der Melkbox (2) befindlichen Tieres an dem Rahmen (3) der Melkbox (2) bewegbar angebracht ist.

15. Vorrichtung nach Anspruch 14,
**dadurch gekennzeichnet, daß** die Roboterarm-Vorrichtung (20) längs einer geraden Führung (37) an der Längsseite der Melkbox (2) verschiebbar ist, wobei der Roboterkopf (21) höhenbewegbar und in bezug auf die Roboterarm-Vorrichtung (20) um eine aufwärts gerichtete Achse (31) schwenkbar ist.

16. Vorrichtung nach einem der vorhergehenden Ansprüche,
**dadurch gekennzeichnet, daß** das Ermittlungsglied (24) und der Roboterkopf (21) mittels pneumatischer Zylinder und/oder Schrittmotoren bewegt werden.

17. Vorrichtung nach einem der vorhergehenden Ansprüche,
**dadurch gekennzeichnet, daß** die Melkbox (2) einen Kuhidentifikationssensor aufweist, der mit dem Computer verbunden ist und in Kombination mit einem von den Tieren zu tragenden Transponder ein Tieridentifikationssystem bildet, mit dessen Hilfe die jeweiligen Dateien bezüglich der einzelnen Tiere von dem Computer gelesen werden, wobei auf der Basis dieser Dateien wahlweise zumindest eine grobe Positionierung des Ermittlungsgliedes (24) und des Roboterkopfes (21) nahe bzw. unter dem Euter eines Tieres vorzunehmen ist.

## Revendications

1. Construction ou agencement similaire pour traite automatique d'animaux, tels que des vaches, comportant un box de traite (2) comprenant un robot de traite (19) muni d'une tête de robot mobile (21) ladite tête de robot servant en tant que support d'un ou plusieurs gobelets trayeurs (22) ledit box de traite comportant en outre un élément de détection (24) pour déterminer la position des trayons des animaux, l'élément de détection (24) et la tête de robot (21) étant mobiles indépendamment l'un de l'autre, caractérisée l'élément de détection (24) est attaché au châssis du box de traite (2) de façon à être déplacé dans trois directions.

2. Construction selon la revendication 1, **caractérisée en ce que** l'élément de détection (24) est mobile dans le box de traite (2) dans une première direction et **en ce que** la tête de robot (21) est mobile dans le box de traite (2) à partir d'une autre direction.

3. Construction selon la revendication 1, **caractérisée en ce que** l'élément de détection (24) est disposé de telle sorte qu'il soit mobile dans les directions verticale, transversale et longitudinale.

4. Construction selon l'une quelconque des revendications précédentes, **caractérisée en ce que**, pendant l'accouplement des gobelets trayeurs (22) sur les trayons d'un animal, l'élément de détection (24) est dans une position située au niveau d'un premier côté des trayons et les gobelets trayeurs sont guidés par la tête de robot (21) vers les trayons à partir d'un autre côté des trayons.

5. Construction selon l'une quelconque des revendications précédentes, **caractérisée en ce que** l'élément de détection (24) est mobile dans le box de traite (2) au niveau du côté arrière du box de traite (2).

6. Construction selon la revendication 5, **caractérisée en ce que**, pendant l'accouplement des gobelets trayeurs (22) sur les trayons d'un animal, l'élément de détection (24) est dans une position proche des trayons arrière de l'animal.

7. Construction selon l'une quelconque des revendications précédentes, **caractérisée en ce que** l'elèment de détection (24) est mobile dans le box de traite (2) à partir du côté du box de traite (2).

8. Construction selon la revendication 7, **caractérisée en ce que**, pendant l'accouplement des gobelets trayeurs (22) sur les trayons d'un animal, l'élément de détection (24) est dans une position proche du côté du pis de l'animal.

9. Construction selon l'une quelconque des revendications précédentes, **caractérisée en ce que** l'élément de détection (24) est disposé de manière rotative, de manière plus particulière en pouvant se déplacer en va-et-vient autour d'un arbre dirigé vers le haut.

10. Construction selon l'une quelconque des revendications précédentes **caractérisée en ce que** l'élément de détection (24) comporte un laser.

11. Construction selon l'une quelconque des revendications précédentes, **caractérisée en ce qu'**un faisceau de balayage de rayonnement est obtenu à l'aide de l'élément de détection (24) pour detecter les trayons a partir du côté arrière.

12. Construction selon l'une quelconque des revendications précédentes, **caractérisée en ce qu'**un faisceau de balayage de rayonnement est obtenu à l'aide de l'élément de détection (24) pour détecter les trayons à partir du côté.

13. Construction selon l'une quelconque des revendications précédentes, **caractérisée en ce que**, à l'aide de l'élément de détection (24), un faisceau de balayage de rayonnement est obtenu, dont le point de balayage est positionné au niveau du côté supérieur des trayons pendant l'accouplement des gobelets trayeurs (22) sur les trayons d'un animal.

14. Construction selon l'une quelconque des revendications précédentes, **caractérisée en ce que** le robot de traite (19) comporte une construction de bras de robot (20), dont la tête de robot (21) forme l'extrémité, cette construction de bras de robot (20) étant reliée de manière mobile au châssis (3) du box de traite (2) à proximité des pattes avant d'un animal present dans le box de traite (2).

15. Construction selon la revendication 14, **caractérisée en ce que** la construction de bras de robot (20) est mobile le long d'un guide rectiligne (37) situé au niveau du côté longitudinal du box de traite (2), alors que la tête de robot (21) est mobile dans la direction vers le haut, et, par rapport à la construction de bras de robot (20), peut pivoter autour d'un arbre dirige vers le haut (31).

16. Construction selon l'une quelconque des revendications pré cédentes **caractérisée en ce que** les déplacements de l'élément de détection (24) et de la tête de robot (21) sont effectués par l'intermédiaire de vérins pneumatiques et/ou de moteurs pas à pas.

17. Construction selon l'une quelconque des revendications précédentes, **caractérisée en ce que** le box de traite (2) comporte un détecteur d'identification de vache qui est relié à l'ordinateur et, en combinaison avec un transpondeur porté par les animaux, forme un système d'identification d'animal, à l'aide duquel les fichiers de données concernés relatifs aux animaux individuels sont lus à partir de l'ordinateur, fichiers de données sur la base desquels le positionnement au moins grossier de l'élément de détection (24) et de la tête de robot (21) à proximité et sous, respectivement, le pis d'un animal, peut facultativement être effectué.
